# EUROPEAN PATENT APPLICATION

(11) **EP 4 807 804 A1**
(43) Date of publication of application: **16.09.2026**
(21) Application number: 24887858.9
(22) Date of filing: 01.11.2024
(51) Int. Cl.: H01M 4/36, H01M 10/054, H01M 4/525, H01M 4/485, H01M 4/52, H01M 4/50, H01M 4/505, C01G 45/00

(54) **SODIUM SECONDARY BATTERY AND MANUFACTURING METHOD THEREFOR**

(30) Priority: 09.11.2023 JP 2023191508
(71) Applicant: CR New Active Materials Co., Ltd., Jiaxing, Zhejiang 314201 (CN)
(72) Inventor: ZHONGCUN, Ren, Toyota City, Aichi Prefecture (JP)
(74) Representative: Metida
(86) International application number: PCT/CN2024/129215
(87) International publication number: WO 2025/098246

(57) **Abstract**

A sodium secondary battery having large charge and discharge capacity and having an energy density equal to or higher than that of a lithium secondary battery. The sodium secondary battery contains a composite metal oxide NaₓMn_{1-y-z}M1_{y}M2_{z}O₂, wherein M1 represents Ni or Fe, M2 represents Co, Ti, Mg, Cu, or Al, x represents 0.95 or less, y represents 0.1-0.5, and z represents 0-0.1. The sodium secondary battery has a positive electrode (4), and the positive electrode (4) contains a positive electrode active material having an initial discharge capacity higher than the initial charge capacity thereof.

## Description

### TECHNICAL FIELD

The present disclosure relates to a sodium secondary battery. In particular, the present disclosure relates to a sodium secondary battery with a positive electrode, where the positive electrode includes a positive electrode active material for the sodium secondary battery that includes a transition metal oxide.

### BACKGROUND

Sodium secondary batteries can be constructed using abundant and inexpensive materials. By putting sodium secondary batteries into practical use, it is expected that a large number of large-scale power sources can be provided. However, sodium secondary batteries lack practical utility due to low energy density. One of the reasons for the low energy density of sodium secondary batteries is the insufficient capacity of positive electrode materials for sodium secondary batteries.

In patent literature 1, a positive electrode material for a sodium secondary battery is disclosed. The positive electrode material includes a sodium-containing transition metal oxide with a composition shown in a formula Naₓ(Mn_{y}Co_{1-y-z}Ni_{z})O₂, where 0.5 < x ≤ 1.0, 0.60 ≤ y ≤ 0.80, 0.05 ≤ z ≤ 0.20, and 0.05 ≤ 1-y-z ≤ 0.25. The positive electrode material is produced by sintering a raw material mixture with the specific composition as described above at a controlled temperature and atmosphere. Consequently, the positive electrode material enables a sodium secondary battery with a higher charge/discharge capacity than conventional sodium secondary batteries.

### [Prior art literature]

### [Patent literature]

[Patent literature 1] Japanese Patent Application Laid-Open No. 2014-229452

### SUMMARY

### [Problem to be solved by the present disclosure]

An object of the present disclosure is to provide a sodium secondary battery that has a large charge and discharge capacity and an energy density equal to or higher than an energy density of a lithium secondary battery. Charge and discharge capacities of conventional positive electrode active materials for sodium secondary batteries are still insufficient to achieve energy densities equal to or higher than energy densities of lithium secondary batteries.

### [Means for resolving the problem]

The present disclosure provides the following aspects:
[Aspect 1] A sodium secondary battery is provided, including a composite metal oxide shown in a formula (1):

   NaₓMn_{1-y-z}M1_{y}M2_{z}O₂ (1)

   [where M1 represents Ni or Fe, M2 represents Co, Ti, Mg, Cu, or Al, x represents 0.95 or less, y represents 0.1 to 0.5, and z represents 0 to 0.1;] and
   the sodium secondary battery has a positive electrode, and the positive electrode includes a positive electrode active material having an initial discharge capacity higher than an initial charge capacity.
[Aspect 2] In the sodium secondary battery according to the aspect 1, x is 0.2 to 0.8, preferably 0.3 to 0.7, and more preferably 0.4 to 0.6.
[Aspect 3] In the sodium secondary battery according to the aspect 1 or 2, y is 0.15 to 0.3 and preferably 0.15 to 0.25.
[Aspect 4] In the sodium secondary battery according to any one of the aspects 1 to 3, z is 0.01 to 0.08 and preferably 0.03 to 0.07.
[Aspect 5] In the sodium secondary battery according to any one of the aspects 1 to 4, the initial discharge capacity is 150% or more, preferably 200% to 400%, and more preferably 250% to 350% higher than the initial charge capacity.
[Aspect 6] In the sodium secondary battery according to any one of the aspects 1 to 5, charge and discharge capacity after a second cycle is higher than the initial charge capacity.
[Aspect 7] In the sodium secondary battery according to any one of the aspects 1 to 6, the initial discharge capacity of the positive electrode active material is higher than 210 mAh/g and is preferably 220 mAh/g to 280 mAh/g.
[Aspect 8] In the sodium secondary battery according to any one of the aspects 1 to 7, the positive electrode is charged at a voltage of more than 4.2 V such as 4.4 V to 4.5 V relative to a standard electrode potential of sodium.
[Aspect 9] A treatment method or a manufacturing method of the sodium secondary battery according to any one of the aspects 1 to 8 is provided, including: charging at a voltage of more than 4.2 V such as 4.4 V to 4.5 V relative to a standard electrode potential of sodium.
[Aspect 10] In the sodium secondary battery according to any one of the aspects 1 to 9, the positive electrode active material includes a co-sintered product of a precipitate derived from an oxidizable metal aqueous solution and a sodium compound.
[Aspect 11] In the sodium secondary battery according to any one of the aspects 1 to 10, the positive electrode includes a sodium compound.
[Aspect 12] In the sodium secondary battery according to the aspect 11, a content of the sodium compound in the positive electrode is 1 mol% to 50 mol%, preferably 3 mol% to 40 mol%, and more preferably 5 mol% to 30 mol% based on a mole number of an oxidizable metal portion in the positive electrode active material.
[Aspect 13] In the sodium secondary battery according to the aspect 11 or 12, the sodium compound includes sodium hydroxide or sodium carbonate.
[Aspect 14] In the sodium secondary battery according to any one of the aspects 1 to 13, after discharging, the positive electrode active material includes a composite metal oxide shown in a formula (3):

   NaₓMn_{1-y-z}M1_{y}M2_{z}O₂ (3)

   [where x represents a value of more than 1 and M1, M2, y, and z have the same definitions as described above].
[Aspect 15] In the sodium secondary battery according to the aspect 14, x represents a value more than 1 and less than or equal to 2, preferably of 1.05 to 1.7, and more preferably of 1.1 to 1.5.

### [Effects of the present disclosure]

The present disclosure can provide a sodium secondary battery that has a large charge and discharge capacity and an energy density equal to or higher than an energy density of a lithium secondary battery.

### BRIEF DESCRIPTION OF THE DRAWING

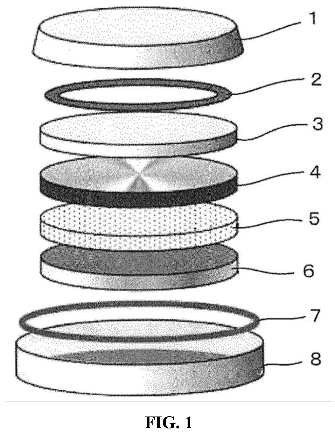

FIG. 1 is an exploded view schematically showing a configuration of a sodium secondary battery as an embodiment of the present disclosure.

### DETAILED DESCRIPTION OF THE EMBODIMENTS

The scope of the present disclosure is not limited to the embodiments described in this specification, and various modifications may be made without departing from the spirit and scope of the present disclosure. Further, when a plurality of upper limit values and a plurality of lower limit values are described for a specific parameter, any one of the plurality of upper limit values and any one of the plurality of lower limit values may be combined to set an appropriate numerical range.

### <Positive electrode active material>

A positive electrode active material used in a positive electrode of the sodium secondary battery of the present disclosure includes a composite metal oxide shown in a formula (1):

NaₓMn_{1-y-z}M1_{y}M2_{z}O₂ (1).

The formula (1) represents a chemical structure of the positive electrode active material of the sodium secondary battery before being initially charged. In a preferred aspect, the positive electrode active material includes the composite metal oxide shown in the formula (1). In the formula (1), Na represents sodium, Mn represents manganese, and M1 includes a metal element other than an alkali metal element. In an aspect, M1 includes at least one selected from the group consisting of nickel (Ni) and iron (Fe), M2 includes at least one selected from the group consisting of cobalt (Co), titanium (Ti), magnesium (Mg), copper (Cu), and aluminum (Al), and O represents oxygen.

In a preferred aspect of the formula (1), M1 is composed of Ni. In another aspect, M1 is composed of Fe. A preferred combination of M1 and M2 can include Ni and Co, Ni and Ti, Ni and Mg, Ni and Cu, and Ni and Al. Another combination of M1 and M2 can include Fe and Co, Fe and Ti, Fe and Mg, Fe and Cu, and Fe and Al.

An atomic ratio x of Na in the formula is 0.95 or less, preferably 0.2 to 0.8, more preferably 0.3 to 0.7, and even more preferably 0.4 to 0.6. If x exceeds 0.95, sodium tends to remain in the positive electrode active material, which may result in insufficient charge and discharge capacity.

An atomic ratio y of M1 in the formula is 0.1 to 0.5, preferably 0.15 to 0.3, and more preferably 0.15 to 0.25. Additionally, an atomic ratio 1-y-z of Mn in the formula is 0.5 to 0.95, preferably 0.6 to 0.9, and more preferably 0.7 to 0.85. y and 1-y-z are controlled within the respective ranges to improve a discharge capacity of the positive electrode active material.

An atomic ratio z of M2 in the formula is 0 to 0.1, preferably 0.01 to 0.08, and more preferably 0.03 to 0.07. Although M2 is not an essential component, the incorporation of M2 in the above amount improves the stability of a crystal structure of the composite metal oxide.

The positive electrode active material used in the present disclosure has the characteristic that an initial discharge capacity is higher than an initial charge capacity. The initial discharge capacity is 150% or more, preferably 200% to 400%, and more preferably 250% to 350% higher than the initial charge capacity.

In an aspect, the initial discharge capacity of the positive electrode active material used in the present disclosure is 150 mAh/g to 400 mAh/g, preferably 200 mAh/g to 300 mAh/g, and more preferably 220 mAh/g to 280 mAh/g, such as a value higher than 210 mAh/g.

Further, the positive electrode active material used in the present disclosure can exhibit a charge and discharge capacity higher than the initial charge capacity even in charge-discharge cycles after a second cycle.

A manufacturing method of the positive electrode active material used in the present disclosure includes the following steps: An aqueous solution including an oxidizable metal (namely, a metal element selected from the group consisting of metal elements other than alkali metal elements) is brought into contact with a precipitating agent to produce a precipitate, and the precipitate and a sodium compound are mixed and sintered. In the specification, the precipitate is sometimes referred to as a "precipitate derived from an oxidizable metal aqueous solution".

The oxidizable metal includes manganese and a metal M1. M1 includes a metal element other than an alkali metal element. In an aspect, M1 includes at least one selected from the group consisting of Ni and Fe. The oxidizable metal may include a metal M2. M2 includes at least one selected from the group consisting of Co, Ti, Mg, Cu, and Al. Specific examples when M1 is used alone and specific examples when M1 and M2 are used in combination are the same as those described above.

A composition ratio of the oxidizable metal in the aqueous solution is preferably adjusted to a relationship shown in a formula (2):

Mn_{1-y-z}M1_{y}M2_{z} (2).

Further, in the formula (2), values of y, z, and 1-y-z have the same definitions as described above.

The aqueous solution including the oxidizable metal can be produced by dissolving a compound such as a chloride, a nitrate, an acetate, a formate, and an oxalate as a raw material in water. Further, when a raw material insoluble in water is adopted, for example, when an oxide, a hydroxide, or a metal material is used as a raw material, the raw material may be dissolved in an acid such as hydrochloric acid, sulfuric acid, or nitric acid or in an aqueous solution of such an acid to produce the aqueous solution including the oxidizable metal.

The precipitating agent can be one or more compounds selected from the group consisting of LiOH (lithium hydroxide), NaOH (sodium hydroxide), KOH (potassium hydroxide), Li₂CO₃ (lithium carbonate), Na₂CO₃ (sodium carbonate), K₂CO₃ (potassium carbonate), (NH₄)₂CO₃ (ammonium carbonate), and (NH₂)₂CO (urea), one or more hydrates thereof, or a combination of such a compound and hydrate. Further, the precipitating agent is preferably dissolved in water and used in a form of an aqueous solution. A concentration of the compound in a precipitating agent aqueous solution is about 0.5 mol/L to 10 mol/L and preferably about 1 mol/L to 8 mol/L. Further, the precipitating agent is preferably NaOH and more preferably a NaOH aqueous solution obtained by dissolving NaOH in water. Further, ammonia water can also be listed as an example of the precipitating agent aqueous solution. The ammonia water may be used in combination with an aqueous solution of the compound.

A process for bringing the aqueous solution including the oxidizable metal into contact with the precipitating agent may include the following processes: a process of adding the precipitating agent (including the precipitating agent aqueous solution) to the aqueous solution including the oxidizable metal; a process of adding the aqueous solution including the oxidizable metal to the precipitating agent aqueous solution; and a process of adding the precipitating agent (including the precipitating agent aqueous solution) and the aqueous solution including the oxidizable metal to water, for example. When the aqueous solution including the oxidizable metal is brought into contact with the precipitating agent, preferably, the oxidizable metal is brought into contact with oxygen. Further, a process of adding the aqueous solution including the oxidizable metal to the precipitating agent aqueous solution under an air atmosphere is preferred.

In the present disclosure, through the contact, a slurry including the precipitate can be obtained. The precipitate includes the oxidizable metal. The precipitate derived from the oxidizable metal aqueous solution preferably includes a precipitate produced after the oxidizable metal aqueous solution is brought into contact with oxygen.

Then, the slurry is subjected to solid-liquid separation to recover the precipitate. The solid-liquid separation can be achieved by any method. From the perspective of operability, filtration is preferred. Alternatively, a method of volatilizing liquid components by heating, such as spray drying, may be employed. Additionally, the recovered precipitate may be washed, dried, etc. The precipitate obtained after the solid-liquid separation may include an excess amount of a precipitating agent component, which can be reduced by the washing. A washing solution used for the washing is preferably water, and may also be a water-soluble organic solvent such as ethanol and acetone. Further, the drying may be simply heat drying, and may also be air drying, vacuum drying, etc. When the heat drying is employed, the heat drying is usually conducted at 50°C to 300°C and preferably about 100°C to 200°C. Further, the washing and the drying may be conducted two or more times.

In the present disclosure, the precipitate obtained by the above method can be mixed with the sodium compound, and then sintering is conducted to produce the positive electrode active material. Regarding a ratio at which the sodium compound and the precipitate are mixed, sodium and the oxidizable metal should satisfy a relationship of a formula (1). Since sodium tends to volatilize upon heating, an amount of sodium to be mixed should exceed the relationship of the formula (1) relative to the oxidizable metal.

The sodium compound can be one or more compounds selected from the group consisting of sodium hydroxide, sodium chloride, sodium nitrate, sodium peroxide, sodium sulfate, sodium bicarbonate, sodium oxalate, and sodium carbonate, or a hydrate thereof. Further, the mixing may be dry mixing or wet mixing. From the perspective of simplicity, the dry mixing is preferred. A device used for the mixing may be a stirring mixer, a V-type mixer, a W-type mixer, a ribbon mixer, a rotary drum mixer, a ball mill, etc.

The sintering also depends on a type of the sodium compound. The sintering is generally conducted at 400°C to 1,200°C, preferably 600°C to 1,000°C, and more preferably 700°C to 900°C. If the temperature of the sintering is too low, sodium tends to remain in the positive electrode active material, which may result in insufficient charge and discharge capacity. If the temperature of the sintering is too high, a crystal structure of the positive electrode active material may be destroyed. After the sintering, the composite metal oxide shown in the formula (1) is obtained.

The sintering is conducted with the sintering temperature held generally for 0.1 h to 20 h and preferably 0.5 h to 10 h. Further, the sintering may be conducted in an atmosphere of air, oxygen, nitrogen, argon, or a mixed gas thereof, and is preferably conducted in an air atmosphere.

Further, the positive electrode active material obtained as described above may be pulverized by, for example, a ball mill or a jet mill. The pulverization and sintering may also be repeated two or more times. Further, if necessary, the positive electrode active material may be washed or classified.

Further, a composition ratio of the positive electrode active material can be identified by, for example, inductively coupled plasma-atomic emission spectroscopy (ICP-AES).

### <Positive electrode>

The positive electrode used in the present disclosure includes the positive electrode active material. In addition to the positive electrode active material, the positive electrode may include a sodium compound. As a result, a larger number of sodium ions than sodium ions released from the positive electrode active material during initial charging can be supplied to an electrolytic solution, thereby improving the energy density of the sodium secondary battery. The sodium compound is of a sodium ion-releasing type. Preferably, the sodium compound includes sodium hydroxide and sodium carbonate. A content of the sodium compound in the positive electrode is 1 mol% to 50 mol%, preferably 3 mol% to 40 mol%, and more preferably 5 mol% to 30 mol% based on a mole number of an oxidizable metal portion in the positive electrode active material. Further, the "oxidizable metal portion in the positive electrode active material" refers to the oxidizable metal portion shown in the formula (2).

The positive electrode can be used as a positive electrode for a sodium secondary battery. From the perspective of acquiring a sodium secondary battery capable of providing a large potential difference, namely, a sodium secondary battery with a high energy density, the positive electrode is preferred as a positive electrode for a sodium secondary battery.

The positive electrode used in the present disclosure can be manufactured by shaping an electrode mixture including the positive electrode active material and, if necessary, a sodium compound into a desired shape of the positive electrode. The electrode mixture usually includes a binder and, if necessary, a conductive agent. The positive electrode may also be produced by supporting the electrode mixture on an electrode current collector.

A method for manufacturing the positive electrode includes, for example, the following steps: The positive electrode active material, the binder, the sodium compound as required, and the conductive agent as required are mixed to produce the electrode mixture. The electrode mixture is then shaped into the desired shape of the positive electrode. The electrode mixture can be prepared as follows: A sodium compound solution is spray-coated onto the positive electrode active material. The solvent is optionally removed by drying. A resulting material is then mixed with the binder and the conductive agent as required. The electrode mixture can also be prepared as follows: The positive electrode active material, the sodium compound, and the solvent are mixed to produce a liquid. The solvent is optionally removed by drying. A resulting material is then mixed with the binder and the conductive agent as required. These methods for manufacturing the positive electrode do not involve treating a metallic sodium raw material, demonstrate excellent safety, and can be implemented with simple steps and devices.

Examples of the conductive agent can include carbon materials such as natural graphite, artificial graphite, cokes, and carbon black. Examples of the binder can include thermoplastic resins. Specific examples of the binder can include: fluororesins such as polyvinylidene fluoride (PVDF), polytetrafluoroethylene (PTFE), tetrafluoroethylene-hexafluoropropylene-vinylidene fluoride copolymer, hexafluoropropylene-vinylidene fluoride copolymer, and tetrafluoroethylene-perfluorovinyl ether copolymer; and polyolefin resins such as polyethylene and polypropylene.

When the positive electrode is used as a positive electrode for a secondary battery, Al, Ni, stainless steel, etc. can be used as an electrode current collector.

A method for shaping the electrode mixture includes, for example, the following method: the electrode mixture itself is pressure-molded; or the electrode mixture is prepared with an organic solvent into a paste, and then the paste is applied onto an electrode current collector, dried, and pressed to fix the electrode mixture onto the electrode current collector. When the paste is prepared, a slurry including the electrode active material, the conductive agent, the binder, and the organic solvent is prepared. Examples of the organic solvent can include: amines such as N,N-dimethylaminopropylamine and diethylenetriamine; ethers such as ethylene oxide and tetrahydrofuran; ketones such as methyl ethyl ketone; esters such as methyl acetate; and aprotic polar solvents such as dimethylacetamide and N-methyl-2-pyrrolidone. A method for applying the electrode mixture onto the electrode current collector includes, for example, slot die coating, screen coating, curtain coating, doctor blade coating, gravure coating, and electrostatic spray coating.

### <Negative electrode>

The negative electrode used in the present disclosure may be any negative electrode used in sodium ion batteries, as long as the negative electrode includes a sodium metal or a negative electrode active material capable of occluding and releasing sodium. Examples of the negative electrode active material include: carbon materials such as hard carbon, soft carbon, natural graphite, artificial graphite, cokes, carbon black, pyrolytic carbon, carbon fibers, and sintered products of organic polymer compounds; layered phosphorus compounds; composite oxides of phosphorus and titanium, namely, MXene; one or more elements selected from the group consisting of Mg, Al, Si, P, K, Ca, Sc, Ti, V, Cr, Mn, Fe, Co, Ni, Cu, Zn, Ga, Ge, Y, Zr, Nb, Mo, Pd, Ag, Cd, In, Sn, Sb, W, Pb, and Bi; and alloys, oxides, halides, and chalkogenides using the aforementioned elements.

The carbon materials can be obtained, for example, by carbonizing phenol resins (such as novolac-type phenol resins and resol-type phenol resins), epoxy resins (such as bisphenol-type epoxy resins and novolac-type epoxy resins), aniline resins, bismaleimide resins, benzoxazine resins, etc. The phenol resins are characterized by a highly developed three-dimensional crosslinked structure. It is speculated that carbon materials obtained by carbonizing the phenol resins also have such a highly developed three-dimensional crosslinked structure. Thus, from the perspective of improving a charge and discharge capacity, the phenol resins are preferred.

The sodium secondary battery has the following properties: Sodium ions are released from the positive electrode active material during charging and introduced into the positive electrode active material during discharging. It has been found that a discharge capacity of the positive electrode active material used in the present disclosure can increase to exceed a theoretical capacity corresponding to a case where x in the formula (1) is 1. In this case, the positive electrode active material of the sodium secondary battery after discharging includes a composite metal oxide shown in a formula (3):

NaₓMn_{1-y-z}M1_{y}M2_{z}O₂ (3)

[where x represents a value of more than 1 and M1, M2, y, and z have the same definitions as described above].
x represents a value preferably more than 1 and less than or equal to 2, more preferably of 1.05 to 1.7, and even more preferably of 1.1 to 1.5. The formula (3) represents a chemical structure of the positive electrode active material of the sodium secondary battery after discharging.

Since the positive electrode active material used in the present disclosure exhibits a larger capacity during initial discharging than during initial charging, a number of sodium ions occluded during the initial discharging is larger than a number of sodium ions released during the initial charging. Therefore, the inherent high charge and discharge capacity of the positive electrode active material can be achieved by the following means: a sodium compound is preliminarily included in the positive electrode; an electrolyte concentration of an electrolytic solution is adjusted to be higher than a conventional electrolyte concentration; or the negative electrode is preliminarily doped with sodium ions.

In the case where an electrolyte concentration of an electrolytic solution is adjusted to be higher than a conventional electrolyte concentration or where the negative electrode is preliminarily doped with sodium ions, the electrolyte concentration of the electrolytic solution or an amount of sodium ions doped in the negative electrode is preferably such that, based on the entire sodium secondary battery, an equivalent ratio of sodium to the oxidizable metal is 1:1, or an amount of sodium relative to the oxidizable metal exceeds the equivalent ratio of 1:1.

A method for doping sodium into the negative electrode is not particularly limited, and can include, for example, the following methods: (i) Metallic sodium is attached to a portion of a negative electrode current collector that has no negative electrode active material, a liquid is injected to produce form a local cell, and sodium is doped into the negative electrode active material. (ii) A film of metallic sodium is formed on the negative electrode active material by vapor deposition or sputtering, and sodium is doped into the negative electrode active material through a solid-phase reaction. (iii) Sodium is electrochemically doped into the negative electrode before battery assembly in an electrolytic solution. (iv) Metallic sodium is added during the production of the composite powder used in the present disclosure, and a mixing treatment is conducted, so as to dope sodium into the negative electrode active material.

From the perspective of improving the energy density of the sodium secondary battery, an amount of sodium doped into the negative electrode is 60% by weight or less, preferably 1% to 40% by weight, and more preferably 5% to 30% by weight relative to the negative electrode active material. If the amount of sodium doped relative to the negative electrode active material exceeds 60% by weight, the energy density of the entire sodium secondary battery decreases, which is thus not preferred.

A negative electrode mixture includes the negative electrode active material and, if necessary, a binder, a conductive agent, etc. Examples of the negative electrode current collector can include Al, Cu, Ni, and stainless steel. Al or Cu is preferred in terms of uneasy formation of an alloy with sodium and easy processing into a film. A method for supporting the negative electrode mixture on the negative electrode current collector is the same as the method for the positive electrode described above. The method may include, for example: the negative electrode mixture itself is pressure-molded; or the negative electrode mixture is prepared with a solvent into a paste, and then the paste is applied onto the negative electrode current collector, dried, and pressed to fix the negative electrode mixture onto the negative electrode current collector.

### <Sodium secondary battery>

The sodium secondary battery of the present disclosure includes the positive electrode and the negative electrode. The sodium secondary battery of the present disclosure can be manufactured as follows: An electrode assembly is produced by stacking or winding the positive electrode, a separator, and the negative electrode sequentially. The electrode assembly is housed in a container such as a battery can and then impregnated with an electrolytic solution. The electrolytic solution is composed of an organic solvent including an electrolyte. The positive electrode or the negative electrode can be produced by supporting an electrode mixture on an electrode current collector.

A shape of the electrode assembly may be, for example, as follows: a cross section of the electrode assembly cut in a direction perpendicular to a winding axis is circular, elliptical, rectangular, or rectangular with rounded corners.

Further, a shape of the sodium secondary battery may be, for example, paper-shaped, coin-shaped, cylindrical, and prismatic.

FIG. 1 is an exploded view schematically showing a configuration of a sodium secondary battery as an embodiment of the present disclosure. The sodium secondary battery shown in FIG. 1 is a coin-type sodium secondary battery, including an electrode assembly using the positive electrode 4, an electrolytic solution (not shown), and battery cases housing these components. The electrode assembly includes a sheet-shaped positive electrode 4, a sheet-shaped negative electrode 6, and a sheet-shaped separator 5. The separator 5 is configured to insulate the positive electrode 4 from the negative electrode 6.

These components, together with a plate spring 2, a spacer 3, a gasket 7, etc. commonly used in the field of sodium secondary batteries, are stacked and housed in battery cases 1 and 8.

The separator that can be used in the sodium secondary battery of the present disclosure, for example, can be a porous membrane, a nonwoven fabric, or a woven fabric that is made of a polyolefin resin such as polyethylene or polypropylene, a fluororesin, or a nitrogen-containing aromatic polymer. Further, two or more of these materials may be used to prepare a single-layer or multi-layer separator. The separator may include, for example, those described in Japanese Patent Application Laid-Open No. 2000-30686 and Japanese Patent Application Laid-Open No. Hei 10-324758. From the perspectives of increasing the volumetric energy density and reducing the internal resistance of the sodium secondary battery, at a given mechanical strength, the thinner the separator, the better the performance. Generally, a thickness of the separator is preferably about 5 µm to 200 µm and more preferably about 5 µm to 40 µm. From the viewpoint of ion permeability, regarding the air permeability measured by the Gurley method, an air permeability of the separator is preferably 50 s/100 cc to 300 s/100 cc and even more preferably 50 s/100 cc to 200 s/100 cc. Further, a porosity of the separator is generally 30% to 80% by volume and preferably 40% to 70% by volume. Separator layers with different porosities may be stacked to serve as the separator.

In the electrolytic solution that can be used in the sodium secondary battery of the present disclosure, the organic solvent can include, for example, a carbonate such as propylene carbonate (PC), ethylene carbonate (EC), dimethyl carbonate (DMC), diethyl carbonate (DEC), ethyl methyl carbonate, methyl isopropyl carbonate, vinylene carbonate, 4-trifluoromethyl-1,3-dioxolan-2-one, and 1,2-bis(methoxycarbonyloxy)ethane; an ether such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; an ester such as methyl formate, methyl acetate, and γ-butyrolactone; a nitrile such as acetonitrile and butyronitrile; an amide such as N,N-dimethylformamide and N,N-dimethylacetamide; a carbamate such as 3-methyl-2-oxazolidinone; a sulfur-containing compound such as sulfolane, dimethyl sulfoxide, and 1,3-propane sultone; or a substance obtained by further introducing a fluorine substituent into any of the above organic solvents. Generally, a mixture of two or more of the aforementioned organic solvents is used as the organic solvent.

The electrolyte in the electrolytic solution is not particularly limited, and can be a salt commonly used in sodium secondary batteries, such as NaPF₆, NaBF₄, NaClO₄, NaTiF₄, NaVF₅, NaAsF, NaSbF₆, NaCF₃SO₃, Na(C₂F₅SO₂)₂N, NaB(C₂O₄)₂, NaB₁₀Cl₁₀, NaB₁₂Cl₁₂, NaCF₃COO, Na₂S₂O₄, NaNO₃, Na₂SO₄, NaPF₃(C₂F₅)₃, NaB(C₆F₅)₄, and Na(CF₃SO₂)₃C. Further, any one of the salts may be used alone, or two or more of the salts may be used in combination.

Preferably, sodium hexafluorophosphate (NaPF₆), sodium perchlorate (NaClO₄), or sodium tetrafluoroborate (NaBF₄) may be used. More preferably, NaPF₆ may be used. The use of NaPF₆ as the salt improves the discharge capacity and cycling life of the positive electrode, thereby enhancing the effect of improving the cycling life of the negative electrode.

From the perspective of increasing the energy density of the sodium secondary battery, the electrolyte concentration of the electrolytic solution is 1.0 mol/kg or more, preferably 1.3 mol/kg to 1.5 mol/kg, and more preferably 1.2 mol/kg to 1.3 mol/kg.

The sodium secondary battery of the present disclosure operates at a voltage of 4.2 V or less relative to a standard electrode potential of sodium. When the sodium secondary battery operates at a voltage higher than 4.2 V, the cycling durability may deteriorate due to problems such as exceeding an oxidative tolerance voltage of an electrolytic solvent. Additionally, it has been clarified that the energy density of the sodium secondary battery of the present disclosure further increases after experiencing a high voltage. That is, from the viewpoint of achieving a high capacity, the positive electrode active material or the positive electrode used in the present disclosure is preferably subjected to a high voltage of 4.2 V or more for a short period of time.

Specifically, the sodium secondary battery, the positive electrode active material, or the positive electrode of the present disclosure is preferably subjected, during charging, to a voltage of 4.2 V or more such as 4.4 V to 4.5 V relative to the standard electrode potential of sodium at least once. As a result, the energy density of the sodium secondary battery and the charge and discharge capacity of the positive electrode active material or the positive electrode can be enhanced. Charge and discharge capacity (mAh/g) of the positive electrode active material or the positive electrode increases by 5% to 25% and preferably 10% to 15%. After the positive electrode active material is subjected to a high voltage, by operating the sodium secondary battery at a rated voltage of, for example, 4.2 V or less, the improved performance can be maintained while preventing the cycling characteristics from deteriorating due to the high voltage.

### Examples

The present disclosure will be described specifically through the following examples, but the present disclosure is not limited to these examples.

### <Examples 1 to 17>

### (1) Synthesis of a composite metal oxide

Manganese chloride, cobalt chloride, nickel chloride, iron chloride, titanium trichloride, magnesium chloride, and copper chloride were dissolved in purified water at a specified ratio to prepare a metal solution. 10 g of sodium hydroxide was dissolved in 50 mL of purified water to prepare a sodium hydroxide solution. Under an air atmosphere, the metal solution was added dropwise to the sodium hydroxide solution to generate a precipitate. Then, the precipitate was brought into contact with oxygen, separated through filtration, and washed with purified water.

The precipitate and sodium hydroxide were weighed with an equivalent ratio of a metal in the precipitate to sodium being 1:1, purified water was added, and thorough mixing was conducted to produce a slurry. The slurry was dried at 120°C to produce a dry material. The dry material was sintered in air at 600°C for 5 h, then ground in a mortar, sintered at 750°C for 5 h, then ground in a mortar, washed with water, and dried to produce a powder. The powder was calcined at 900°C, then ground in a mortar, washed with water, and dried to produce the composite metal oxide. Mixing ratios (molar ratios) of metals were shown in Table 1.

Composition ratios of the composite metal oxides synthesized in Examples 13 to 15 and 17 were determined by ICP-AES. Test results were as follows: Na_{0.45}Mn_{0.8}Ni_{0.15}Co_{0.05}O₂ (Example 13), Na_{0.55}Mn_{0.8}Ni_{0.15}Ti_{0.05}O₂ (Example 14), Na_{0.60}Mn_{0.8}Ni_{0.15}Mg_{0.05}O₂ (Example 15), and Na_{0.40}Mn_{0.8}Ni_{0.15}Cu_{0.05}O₂ (Example 17).

### (2) Fabrication of a positive electrode and a negative electrode

According to a composition ratio of electrode active material : conductive material : binder = 8:1:1 (weight ratio), a composite metal oxide as a positive electrode active material or a phenol resin carbide as a negative electrode active material, acetylene black (manufactured by Denki Kagaku Kogyo Kabushiki Kaisha) as a conductive material, and PTFE ("F104" (trade name) manufactured by Daikin Industries, Ltd.) as a binder were weighed, placed in a bottle, and mixed by shaking. A shear force was applied to a resulting mixture in a mortar for crushing, thereby forming a sheet with a thickness of about 100 µm. The sheet was punched into a disk with a diameter of 13 mm to obtain the positive electrode or the negative electrode.

### (4) Fabrication of a Na-doped negative electrode

In a glove box, a sodium metal foil with a thickness of 20 µm and a diameter of 5 mm was pressure-bonded onto a dried negative electrode disk.

### (5) Fabrication of a sodium secondary battery

The positive electrode and the negative electrode fabricated above, an electrolytic solution, a separator, a gasket, cases, and other common components were used to assemble a single cell of the sodium secondary battery. A weight per unit area ratio of the positive electrode to the negative electrode was adjusted to 1:0.8. An exploded perspective view of the single cell was shown in FIG. 1.

### (Electrolytic solution A)

An electrolytic solution including a specified concentration of NaPF₆ in a mixed solvent of EC and DEC at 1:1.

### (Electrolytic solution B)

An electrolytic solution including a specified concentration of NaClO₄ in a mixed solvent of EC and DEC at 1:1.

The single cell was subjected to a charge-discharge test with a charge-discharge test apparatus under conditions described below to determine properties of the single cell. Test items and test results were shown in Tables 1 and 2.
Current: 0.1 mAh.
Mode: CCCVCC (cutoff at 0.05 C) CC.
Temperature: 35°C.
Positive electrode voltage range: 1.25 V to 4.2 V.

### <Example 18>

The sodium secondary battery in Example 1 was subjected to one charge-discharge cycle with a charge-discharge test apparatus under the following conditions:
Current: 0.1 mAh.
Mode: CCCVCC (cutoff at 0.05 C) CC.
Temperature: 35°C.
Positive electrode voltage range: 1.25 V to 4.4 V.

Then, properties of the sodium secondary battery that had experienced a high voltage were determined in the same manner as in Example 1. Test items and test results were shown in Tables 1 and 2.

### <Example 19>

A composite metal oxide was synthesized and a sodium secondary battery was fabricated in the same manner as in Example 1, except that sodium carbonate was used instead of sodium hydroxide. Properties of the sodium secondary battery were tested. Test results were shown in Tables 1 and 2.

### <Comparative Example 1>

A sodium secondary battery was fabricated in the same manner as in Example 1, except that a composite metal oxide with a Mn:Ni:Fe ratio of 1:1:1 (manufactured by Beijing Easpring Material Technology Co., Ltd.) was used as the positive electrode active material. Properties of the sodium secondary battery were tested. Test results were shown in Tables 1 and 2.

### <Comparative Example 2>

According to a molar ratio of Na:(Mn + Co + Ni) = 1:1 and a molar ratio of Mn:Ni:Co = 8:1.5:0.5, a sodium carbonate (Na₂CO₃) powder with a purity of 99% or more, manganese (II, III) oxide (Mn₃O₄), and nickel cobalt manganese hydroxide ((NiMnCo)OH₂) were weighed, mixed in a mortar, filled into an alumina crucible, sintered in an electric furnace under an air atmosphere at 900°C for 10 h, and cooled naturally in the electric furnace to produce a composite metal oxide.

A sodium secondary battery was fabricated in the same manner as in Example 1, except that the composite metal oxide produced above was used as the positive electrode active material. Properties of the sodium secondary battery were tested. Test results were shown in Tables 1 and 2.

### <Control Example 1>

A lithium secondary battery was fabricated in the same manner as in Example 1, except that a composite metal oxide with a Mn:Ni:Co ratio of 1:1:1 (manufactured by Beijing Easpring Material Technology Co., Ltd.) was used as the positive electrode active material, graphite (manufactured by BTR New Material Group Co., Ltd.) was used as the negative electrode, and a 1 mol/L solution of LiPF₆ in (EC : DEC = 1:1) was used as the electrolytic solution. Properties of the lithium secondary battery were tested. Test results were shown in Tables 1 and 2.

### (Electrolytic solution C)

An electrolytic solution including a specified concentration of LiPF₆ in a mixed solvent of EC and DEC at 1:1.

### <Control Example 2>

A lithium secondary battery was fabricated in the same manner as in Example 1, except that lithium iron phosphate (LFP) (LiFePO₄ manufactured by Gelon) was used as the positive electrode active material, graphite (manufactured by BTR New Material Group Co., Ltd.) was used as the negative electrode, and a 1 mol/L solution of LiPF₆ in (EC : DEC = 1:1) was used as the electrolytic solution. Properties of the lithium secondary battery were tested. Test results were shown in Tables 1 and 2.

### <Control Example 3>

A lithium secondary battery was fabricated in the same manner as in Control Example 2, except that graphite doped with silicon (Si) (manufactured by BTR New Material Group Co., Ltd.) was used as the negative electrode. Properties of the lithium secondary battery were tested. Test results were shown in Tables 1 and 2.

**[Table 1]**

| Example | Positive electrode | Negative electrode | Electrolytic solution | Initial charge voltage | Initial charge capacity (based on the positive electrode) | Initial discharge capacity (based on the positive electrode) | Charge and discharge capacity after 50 cycles |
|---|---|---|---|---|---|---|---|
| | (molar ratio) | (weight ratio) | (molar concentration) | (V) | (mAh/g) | (mAh/g) | (mAh/g) |
| 1 | Mn:Ni=8:2 | Carbon 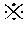 ¹ | A (1) | 4.2 | 90 | 200 | 160 |
| 2 | Mn:Ni=8:2 | Carbon 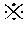 ² = 10:0.5 | A (1) | 4.2 | 155 | 210 | 173 |
| 3 | Mn:Ni=8:2 | Carbon : Na = 10:1 | A (1) | 4.2 | 250 | 220 | 187 |
| 4 | Mn:Ni=8:2 | Carbon : Na = 10:2 | A (1) | 4.2 | 300 | 230 | 207 |
| 5 | Mn:Ni=8:2 | Carbon : Na = 10:4 | A (1) | 4.2 | 350 | 250 | 238 |
| 6 | Mn:Ni=8:2 | Carbon | A (1.2) | 4.2 | 90 | 210 | 168 |
| 7 | Mn:Ni=8:2 | Carbon | A (1.3) | 4.2 | 100 | 215 | 183 |
| 8 | Mn:Ni=8:2 | Carbon | A (1.4) | 4.2 | 105 | 220 | 198 |
| 9 | Mn:Ni=8:2 | Carbon | A (1.5) | 4.2 | 110 | 223 | 212 |
| 10 | Mn:Ni=8:2 | Carbon | B (1.3) | 4.2 | 85 | 205 | 154 |
| 11 | Mn:Ni=8:2 | Na 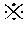 ³ | A (1) | 4.2 | 85 | 250 | 175 |
| 12 | Mn:Ni=5:5 | Na | A (1) | 4.2 | 190 | 190 | 171 |
| 13 | Mn:Ni:Co=8:1.5:0.5 | Na | A (1) | 4.2 | 97 | 256 | 243 |
| 14 | Mn:Ni:Ti=8:1.5:0.5 | Na | A (1) | 4.2 | 106 | 251 | 240 |
| 15 | Mn:Ni:Mg=8:1.5:0.5 | Na | A (1) | 4.2 | 120 | 248 | 236 |
| 16 | Mn:Fe=8:2 | Na | A (1) | 4.2 | 85 | 225 | 203 |
| 17 | Mn:Ni:Cu=8:1.5:0.5 | Na | A (1) | 4.2 | 60 | 265 | 255 |
| 18 | Mn:Ni=8:2 | Carbon | A (1) | 4.4 | 85 | 268 | 248 |
| 19 | Mn:Ni=8:2 | Carbon | A (1) | 4.3 | 85 | 238 | 208 |
| Comparative Example 1 | Mn:Ni:Fe=1:1:1 | Na | A (1) | 4.2 | 130 | 130 | 111 |
| Comparative Example 2 | Mn:Ni=8:2 | Na | A (1) | 4.2 | 130 | 130 | 117 |
| Control Example 1 | Li\|Mn:Ni:Co=1:1:1 | Graphite | C (1) | 4.2 | 160 | 160 | 128 |
| Control Example 2 | LFP | Graphite | C (1) | 3.3 | 145 | 145 | 131 |
| Control Example 3 | LFP | Graphite + Si | C (1) | 4.2 | 160 | 160 | 112 |

| | | | | | | | |
|---|---|---|---|---|---|---|---|
| 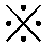 1: Phenol resin carbide 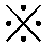 2: Na-doped phenol resin carbide 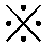 3: Negative electrode that is made of metallic sodium and has a thickness of 250 µm and a diameter of 14 mm | | | | | | | |

**[Table 2]**

| Example | Capacity contributed by the positive electrode | Capacity contributed by the negative electrode | Voltage generated by the single cell (average) | Material-based gravimetric energy density |
|---|---|---|---|---|
| | (mAh/g) | (mAh/g) | V | (Wh/kg) |
| 1 | 200 | 250 | 2.55 | 297.24 |
| 2 | 210 | 400 | 2.55 | 391.05 |
| 3 | 220 | 450 | 2.55 | 408.61 |
| 4 | 230 | 500 | 2.55 | 423.82 |
| 5 | 250 | 600 | 2.55 | 448.9 |
| 6 | 210 | 270 | 2.55 | 322.73 |
| 7 | 215 | 280 | 2.55 | 335.47 |
| 8 | 220 | 280 | 2.55 | 335.47 |
| 9 | 223 | 280 | 2.55 | 313.01 |
| 10 | 205 | 280 | 2.55 | 335.47 |
| 11 | 250 | | 2.75 | 608.03 |
| 12 | 190 | | 3 | 586.42 |
| 13 | 255 | | 2.8 | 628.66 |
| 14 | 251 | | 2.8 | 620.31 |
| 15 | 248 | | 2.8 | 615.11 |
| 16 | 225 | | 2.6 | 568.19 |
| 17 | 265 | | 2.6 | 683.21 |
| 18 | 268 | 280 | 2.9 | 321.33 |
| 19 | 238 | 280 | 2.6 | 298.3 |
| Comparative Example 1 | 130 | | 2.65 | 231.96 |
| Comparative Example 2 | 130 | | | |
| Control Example 1 | 160 | 371 | 3.6 | 363.39 |
| Control Example 2 | 145 | 371 | 3.2 | 322.32 |
| Control Example 3 | 160 | 430 | 3.6 | 441.44 |

According to the measurement results shown in Table 2, the sodium secondary battery using the positive electrode active material has an energy density equal to or higher than an energy density of a lithium secondary battery using a ternary material or an LFP lithium secondary battery.

### <Examples 20 to 22>

A positive electrode including sodium carbonate was fabricated.

The oxidizable metal portion in the composite metal oxide (positive electrode active material) produced in Example 1 and sodium carbonate were mixed at a specified ratio to produce a mixture. According to a composition ratio of mixture : conductive material : binder = 8:1:1 (weight ratio), the mixture, acetylene black (manufactured by Denki Kagaku Kogyo Kabushiki Kaisha) as a conductive material, and PTFE ("F104" (trade name) manufactured by Daikin Industries, Ltd.) as a binder were weighed, placed in a bottle, and mixed by shaking. A shear force was applied to a resulting mixture in a mortar for crushing, thereby forming a sheet with a thickness of about 100 µm. The sheet was punched into a disk with a diameter of 13 mm to obtain the positive electrode.

A sodium secondary battery was fabricated in the same manner as in Example 1, except that the positive electrode fabricated above was employed. Properties of the sodium secondary battery were tested. Test results were shown in Tables 3 and 4.

### <Example 23>

Sodium carbonate and the composite metal oxide (positive electrode active material) prepared in Example 1 were dispersed in ethanol to produce a dispersion. The dispersion was dried by spray-drying to produce active material particles with sodium carbonate supported on a surface. A content of the sodium carbonate was adjusted by adjusting the mixing ratio of the oxidizable metal portion in the positive electrode active material to the sodium carbonate to a specified value. A positive electrode was fabricated in the same manner as in Example 20, except that the active material particles were used.

A sodium secondary battery was fabricated in the same manner as in Example 1, except that the positive electrode fabricated above was employed. Properties of the sodium secondary battery were tested. Test results were shown in Table 3.

**[Table 3] [0154]**

| Example | Molar ratio of the oxidizable metal portion to Na₂CO₃ | Negative electrode | Electrolytic solution | Initial charge voltage | Initial charge capacity | Initial discharge capacity | Charge and discharge capacity after 50 cycles (mAh/g) |
|---|---|---|---|---|---|---|---|
| | | | (molar concentration) | (V) | (mAh/g) | (mAh/g) | |
| 20 | (Mn₈Ni₂): Na₂CO₃=1:0.1 | Carbon 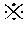 ¹ | A (1) | 4.2 | 135 | 121 | 101 |
| 21 | (Mn₈Ni₂): Na₂CO₃=1:0.2 | Carbon | A (1) | 4.2 | 158 | 141 | 122 |
| 22 | (Mn₈Ni₂): Na₂CO₃=1:0.3 | Carbon | A (1) | 4.2 | 247 | 226 | 213 |
| 23 | (Mn₈Ni₂): Na₂CO₃ 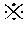 ²=1:0.1 | Carbon | A (1) | 4.2 | 251 | 238 | 218 |

| | | | | | | | |
|---|---|---|---|---|---|---|---|
| 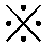 1: Phenol resin carbide 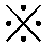 2: Sodium carbonate and the active material of Example 1 are dispersed in ethanol, and a resulting dispersion is spray-dried to support sodium carbonate on a surface of the active material. | | | | | | | |

### <Example 24>

A sodium secondary battery was fabricated in the same manner as in Example 11, and subjected to 3 charge-discharge cycles under the same conditions. During the third charge-discharge cycle, a charge contribution capacity and a discharge contribution capacity were measured. Then, the sodium secondary battery in a discharged state was disassembled, and a positive electrode was taken out. The positive electrode was washed with ethanol, and a positive electrode mixture was dissolved in nitric acid to produce a solution. A sample solution was prepared by filtering out a residue from the solution, and analyzed by ICP-AES for a composition. Test results were shown in Table 4.

### <Example 25>

A sodium secondary battery was fabricated in the same manner as in Example 17, and subjected to 3 charge-discharge cycles under the same conditions. During the third charge-discharge cycle, a charge contribution capacity and a discharge contribution capacity were measured. Then, the sodium secondary battery in a discharged state was disassembled, and a positive electrode was taken out. The positive electrode was washed with ethanol, and a positive electrode mixture was dissolved in nitric acid to produce a solution. A sample solution was prepared by filtering out a residue from the solution, and analyzed by ICP-AES for a composition. Test results were shown in Table 4.

### <Control Example 4>

A sodium secondary battery was fabricated in the same manner as in Example 23, except that a composite metal oxide with a Mn:Ni:Fe ratio of 1:1:1 (manufactured by Beijing Easpring Material Technology Co., Ltd.) was used as the positive electrode active material. Charge and discharge contribution capacities of the sodium secondary battery were measured. Then, a positive electrode active material was taken out from the sodium secondary battery in a discharged state, and analyzed by ICP-AES for a composition. Test results were shown in Table 4.

**[Table 4]**

| | | Control Example 4 | Example 24 | Example 25 |
|---|---|---|---|---|
| Charge contribution capacity (mAh/g) | | 151 | 113 | 118 |
| Discharge contribution capacity (mAh/g) | | 141 | 243 | 276 |
| Molar ratio of components in the positive electrode after discharging | Na | 0.98 | 1.21 | 1.49 |
| | Ni | 0.33 | 0.21 | 0.15 |
| | Mn | 0.33 | 0.79 | 0.79 |
| | Fe | 0.33 | 0 | 0 |
| | Cu | 0 | 0 | 0.6 |

According to the experimental results shown in Table 4, the discharge capacity of the sodium secondary battery of the present disclosure can increase to exceed the theoretical capacity, and the positive electrode active material has a chemical structure shown in a formula (3) after discharging.

### [Explanation of reference numerals]

1, 8: Cases
2: Plate spring
3: Spacer
4: Positive electrode
5: Separator
6: Negative electrode
7: Gasket

## Claims

1. A sodium secondary battery, comprising a composite metal oxide shown in a formula (1):
NaₓMn_{1-y-z}M1_{y}M2_{z}O₂ (1)
[wherein M1 represents Ni or Fe, M2 represents Co, Ti, Mg, Cu, or Al, x represents 0.95 or less, y represents 0.1 to 0.5, and z represents 0 to 0.1;] and
the sodium secondary battery has a positive electrode, and the positive electrode comprises a positive electrode active material having an initial discharge capacity higher than an initial charge capacity.

2. The sodium secondary battery according to claim 1, wherein x is 0.2 to 0.8.

3. The sodium secondary battery according to claim 2, wherein y is 0.15 to 0.3.

4. The sodium secondary battery according to claim 3, wherein z is 0.01 to 0.08.

5. The sodium secondary battery according to any one of claims 1 to 4, wherein the initial discharge capacity of the positive electrode active material is 150% or more higher than the initial charge capacity.

6. The sodium secondary battery according to any one of claims 1 to 4, wherein a charge and discharge capacity of the positive electrode active material after a second cycle is higher than the initial charge capacity.

7. The sodium secondary battery according to any one of claims 1 to 4, wherein the initial discharge capacity of the positive electrode active material is higher than 210 mAh/g.

8. The sodium secondary battery according to any one of claims 1 to 4, wherein the positive electrode is charged at a voltage of more than 4.2 V relative to a standard electrode potential of sodium.

9. A manufacturing method of the sodium secondary battery according to any one of claims 1 to 4, comprising: charging at a voltage of more than 4.2 V relative to a standard electrode potential of sodium.

10. The sodium secondary battery according to any one of claims 1 to 4, wherein the positive electrode active material comprises a co-sintered product of a precipitate derived from an oxidizable metal aqueous solution and a sodium compound.

11. The sodium secondary battery according to any one of claims 1 to 4, wherein the positive electrode comprises a sodium compound.

12. The sodium secondary battery according to claim 11, wherein a content of the sodium compound in the positive electrode is 1 mol% to 50 mol% based on a mole number of an oxidizable metal portion in the positive electrode active material.

13. The sodium secondary battery according to claim 11, wherein the sodium compound comprises sodium hydroxide or sodium carbonate.

14. The sodium secondary battery according to any one of claims 1 to 4, wherein after discharging, the positive electrode active material comprises a composite metal oxide shown in a formula (3):
NaₓMn_{1-y-z}M1_{y}M2_{z}O₂ (3)
[wherein x represents a value of more than 1 and M1, M2, y, and z have same definitions as described above].

15. The sodium secondary battery according to claim 14, wherein x represents a value more than 1 and less than or equal to 2.
